# EUROPEAN PATENT APPLICATION

(11) **EP 4 776 174 A1**
(43) Date of publication of application: **15.07.2026**
(21) Application number: 24862050.2
(22) Date of filing: 05.09.2024
(51) Int. Cl.: G06F 40/109

(54) **TEXT PROCESSING METHOD, APPARATUS, ELECTRONIC DEVICE AND STORAGE MEDIUM**

(30) Priority: 08.09.2023 CN 202311162507
(71) Applicant: Beijing Zitiao Network Technology Co., Ltd., Beijing 100190 (CN)
(72) Inventor: NING, Hualong, Beijing 100028 (CN)
(74) Representative: Grünecker Patent- und Rechtsanwälte PartG mbB
(86) International application number: PCT/CN2024/117284
(87) International publication number: WO 2025/051212

(57) **Abstract**

Embodiments of the disclosure provide a method, an apparatus, an electronic device, and a storage medium for text processing. The method includes: displaying, in a text editing interface, added text to be processed in a first layout path in response to a text adding trigger operation, where the text to be processed includes a plurality of text characters; determining, in response to a character layout trigger operation input for the text to be processed, text to be laid out corresponding to the text to be processed and a second layout path corresponding to the text to be laid out, where the text to be laid out is text including some or all of the text characters in the text to be processed; and displaying, in the text editing interface, the text to be laid out in the second layout path, where the first layout path and/or the second layout path include at least one curved path. According to the technical solutions of the embodiments of the disclosure, the layout path of the text to be processed can be adjusted easily and conveniently, diversified presentation of text layout styles can be achieved, and the visual effects of the text can be enriched.

## Description

The present application claims priority to Chinese Patent Application No. 202311162507.2, filed on September 08, 2023, and entitled "METHOD, APPARATUS, ELECTRONIC DEVICE, AND STORAGE MEDIUM FOR TEXT PROCESSING", which is hereby incorporated by reference in its entirety.

### FIELD

Embodiments of the present disclosure relate to computer application technologies, and in particular, to a method, an apparatus, an electronic device, and a storage medium for text processing.

### BACKGROUND

In a video editing scenario, adding text to a video to enrich video effects is a way favored by users. In other words, in the video editing scenario, text editing is a basic and important function, and in text editing, text layout is a relatively core function point.

In the related art, in the video editing scenario, the layout of text is often fixed, which renders the visual effect of the text layout relatively monotonous. However, video content is often diverse, and expected matching text layouts are different. Such a fixed text layout method is often difficult to match diverse video editing requirements.

### SUMMARY

The present disclosure provides a method, an apparatus, an electronic device, and a storage medium for text processing, to achieve diverse text layout effects.

In a first aspect, an embodiment of the present disclosure provides a method for text processing, including: displaying, in a text editing interface, added text to be processed in a first layout path in response to a text adding trigger operation, where the text to be processed includes a plurality of text characters; determining, in response to a character layout trigger operation input for the text to be processed, text to be laid out corresponding to the text to be processed and a second layout path corresponding to the text to be laid out, where the text to be laid out is text including some or all of the text characters in the text to be processed; and displaying, in the text editing interface, the text to be laid out in the second layout path, where the first layout path and/or the second layout path include at least one curved path.

In a second aspect, an embodiment of the present disclosure further provides an apparatus for text processing, including: a text adding module configured to display, in a text editing interface, added text to be processed in a first layout path in response to a text adding trigger operation, where the text to be processed includes a plurality of text characters; a layout trigger module configured to determine, in response to a character layout trigger operation input for the text to be processed, text to be laid out corresponding to the text to be processed and a second layout path corresponding to the text to be laid out, where the text to be laid out is text including some or all of the text characters in the text to be processed; and a layout update module configured to display, in the text editing interface, the text to be laid out in the second layout path, where the first layout path and/or the second layout path include at least one curved path.

In a third aspect, an embodiment of the present disclosure further provides an electronic device, including: one or more processors; and a storage device, configured to store one or more programs, where the one or more programs, when executed by the one or more processors, cause the one or more processors to implement the method for text processing according to any one of the embodiments of the present disclosure.

In a fourth aspect, an embodiment of the present disclosure further provides a storage medium including computer-executable instructions, where the computer-executable instructions, when executed by a computer processor, are configured to perform the method for text processing according to any one of the embodiments of the present disclosure.

### BRIEF DESCRIPTION OF DRAWINGS

The above and other features, advantages, and aspects of the embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
FIG. 1A is a schematic flowchart of a method for text processing according to an embodiment of the present disclosure;
FIG. 1B is a schematic diagram of a style of a linear curve used as a first layout path in a method for text processing according to an embodiment of the present disclosure;
FIG. 1C is a schematic diagram of a style of a downwardly curved arc-shaped curve used as a second layout path in a method for text processing according to an embodiment of the present disclosure;
FIG. 1D is a schematic diagram of a style of an upwardly curved arc-shaped curve used as a second layout path in a method for text processing according to an embodiment of the present disclosure;
FIG. 2 is a schematic flowchart of a method for text processing according to a further embodiment of the present disclosure;
FIG. 3 is a schematic flowchart of a method for text processing according to a yet further embodiment of the present disclosure;
FIG. 4 is a schematic structural diagram of an apparatus for text processing according to an embodiment of the present disclosure; and
FIG. 5 is a schematic structural diagram of an electronic device according to an embodiment of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein; rather, these embodiments are provided for a thorough and complete understanding of the present disclosure. It should be understood that the drawings and embodiments of the present disclosure are only for example purposes and are not intended to limit the scope of protection of the present disclosure.

It should be understood that the various steps described in the method implementations of the present disclosure may be performed in different orders and/or in parallel. Furthermore, the method implementations may include additional steps and/or omit performing the illustrated steps. The scope of the present disclosure is not limited in this respect.

As used herein, the term "include/comprise" and variations thereof are open-ended inclusions, i.e., "include/comprise but not limited to". The term "based on" is "based at least in part on". The term "one embodiment" means "at least one embodiment"; the term "another embodiment" means "at least one other embodiment"; the term "some embodiments" means "at least some embodiments". Relevant definitions of other terms will be given in the description below.

It should be noted that concepts such as "first" and "second" as mentioned in the present disclosure are only used to distinguish different apparatuses, modules, or units, and are not used to limit the order or interdependence of the functions performed by these apparatuses, modules, or units.

It should be noted that the modifiers "one" and "a plurality of" mentioned in the present disclosure are illustrative and not restrictive, and those skilled in the art should understand that unless otherwise explicitly specified in the context, they should be understood as "one or more".

The names of messages or information exchanged between a plurality of apparatuses in the implementations of the present disclosure are only for illustrative purposes, and are not intended to limit the scope of these messages or information.

It may be understood that before using the technical solutions disclosed in the embodiments of the present disclosure, the user should be informed of the type, range of use, use scenarios, etc., of personal information involved in the present disclosure in an appropriate manner and the authorization of the user should be obtained in accordance with relevant laws and regulations.

For example, in response to reception of an active request from a user, prompt information is sent to the user to clearly prompt the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to reception of the active request from the user, the prompt information may be sent to the user in the form of, for example, a pop-up window, and the prompt information may be presented in text in the pop-up window. In addition, the pop-up window may also include a selection control for the user to select "agree" or "disagree" to provide the personal information to the electronic device.

It may be understood that the above process of notifying and acquiring user authorization is only illustrative, and does not limit the implementations of the present disclosure, and other manners that satisfy relevant laws and regulations may also be applied in the implementations of the present disclosure.

It may be understood that the data involved in the technical solution (including but not limited to the data itself, acquisition or use of the data) should comply with requirements of corresponding laws, regulations, and related provisions.

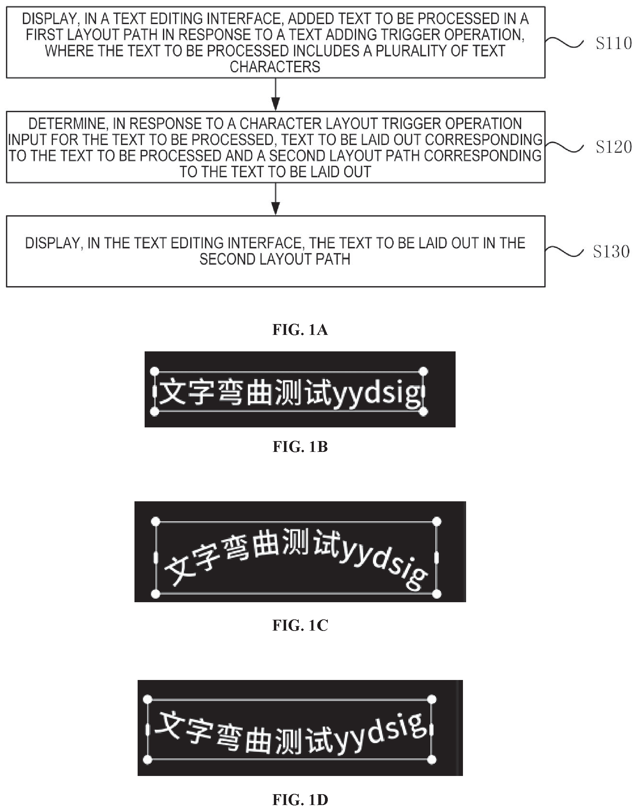

FIG. 1A is a schematic flowchart of a method for text processing according to an embodiment of the present disclosure. The embodiment of the present disclosure may be applicable to a case of deleting an object and restoring the deleted object. The method may be executed by an apparatus for text processing, which may be implemented in the form of software and/or hardware, optionally, by an electronic device, which may be a mobile terminal, a PC, a server, etc.

As shown in FIG. 1A, the method in this embodiment may specifically include the following steps.

At block S110, added text to be processed is displayed in a first layout path in a text editing interface in response to a text adding trigger operation, where the text to be processed includes a plurality of text characters.

The text adding trigger operation may be understood as an operation triggered to add the text to be processed. The layout path may be understood as an arrangement track of the plurality of text characters in the text to be processed. The first layout path may be understood as a layout path used when the text to be processed is added, or may be understood as an initial layout path of the text to be processed. For example, the first layout path may be an original default layout path, a default layout path adjusted based on a user operation, or a layout path used by the user last time. The text characters may be understood as characters that form the text to be processed. Optionally, the default layout path may be a linear path, for example, a linear path arranged in a row or column. The text characters may be characters in any one or more languages, and the content or language form of the characters is not limited herein.

In the embodiment of the present disclosure, the text adding trigger operation may be generated in a plurality of manners. For example, in response to a control trigger operation performed on a text submission control, the text input in a preset text input control may be acquired as the text to be added. For example, the text input control may be a text input box, a text writing area, a text reading control, or the like.

Optionally, the added text to be processed may be displayed in a first display area of the text editing interface in the first layout path. Further, a text display effect setting control may be displayed in a second display area of the text editing interface, which may be used to set the display effect of the text to be processed, and support rich text settings.

As an optional embodiment of the present disclosure, a text acting object, such as a picture or a video, may be displayed in the text editing interface. In response to the text adding trigger operation input for the text object, the added text to be processed may be displayed in a preset position of the text acting object in the first layout path, where the preset position may be understood as a preset initial display position of the text to be processed in the text acting object, such as the top, middle, bottom, or one-third of the distance from the top boundary of the text acting object.

Specifically, in response to the text adding trigger operation, the text to be processed is acquired, the first layout path corresponding to the text to be processed is determined. Then, the added text to be processed may be displayed in the text editing interface in the first layout path. After the first layout path corresponding to the text to be processed is determined, the text to be processed may also be parsed based on the first layout path to obtain text attribute information of the text to be processed. The text attribute information may include, but is not limited to, one or more of: a font size corresponding to the text characters in the text to be processed, character spacing between the text characters, an inclination angle corresponding to the text characters, and a style (such as bold, color, shadow, or glow) of the text characters.

It may be understood that during the process of adding the text to be processed, the text attribute information corresponding to the text to be processed may be associated with an input text editing operation. Therefore, in response to the text editing operation, the text attribute information of the text to be processed may be updated, and the display effect of the text to be processed in the first layout path may be updated based on the text attribute information.

At block S 120, in response to a character layout trigger operation input for the text to be processed, text to be laid out corresponding to the text to be processed and a second layout path corresponding to the text to be laid out are determined.

The text to be laid out may be text including some or all of the text characters in the text to be processed. In other words, the text to be processed as a whole may be laid out, or local text in the text to be processed may be laid out. Some text characters in the text to be processed may be a plurality of text characters arranged continuously and/or discretely in the text to be processed. The character layout trigger operation may be understood as an operation triggered to re-layout the text to be laid out. Since there are a plurality of manners to re-layout the text to be laid out, and the resulting presentation is related to the display track of characters, the re-layout manners may be distinguished by the layout path. In the embodiment of the present disclosure, after the character layout trigger operation input for the text to be processed is received, the text to be laid out corresponding to the text to be processed may be determined, and the re-layout path, i.e., the second layout path, corresponding to the text to be laid out may be determined.

In an optional implementation of the embodiment of the present disclosure, specifically, in response to a character selection trigger operation input for at least some of the text characters in the text to be processed, text including the selected text characters may be used as the text to be laid out; and in response to a layout switch trigger operation input for the text to be laid out, a switched layout path may be determined and used as the second layout path corresponding to the text to be laid out. With the technical solution, the text characters to be re-laid out may be accurately determined first based on the character selection trigger operation, and fine layout of the text to be processed may be achieved with the text characters as the processing unit. Then, the second layout path to be used may be accurately acquired based on the layout switch trigger operation, and flexible switching of the layout path can be achieved.

The character selection trigger operation may be understood as an operation triggered to select or deselect one or more text characters. The layout switch trigger operation may be understood as an operation triggered to re-layout the text to be processed based on a triggered layout path, or may be understood as an operation to switch the first layout path to a triggered second layout path. For example, the layout switch trigger operation may be a selection operation for the second layout path or an operation to switch the first layout path.

In the embodiment of the present disclosure, the character selection trigger operation input for at least some of the text characters in the text to be processed may be a box selection operation input for at least some of the text characters in the text to be processed, and the text characters in the box-selected area may be used as the selected text characters. Alternatively, text characters between a start dragging position and an end dragging position of a cursor may be used as the selected text characters based on a cursor dragging operation. Alternatively, based on addition of a selection control and a selection operation input for a plurality of consecutive or discrete text characters in the text to be processed, for example, in a case where a Ctrl key is pressed, a character selection operation is input.

Optionally, determining the switched layout path in response to the layout switch trigger operation may include in a case where a plurality of layout path identifications are displayed in the text editing interface, determining, in response to an identification selection operation for the layout path identifications, a preset layout path corresponding to the selected layout path identification as the switched layout path. The layout path identification may be understood as identification information used by the user to identify different layout paths. For example, the layout path identification may be an icon that displays an example of the layout effect of the layout path corresponding to the layout path identification. With the technical solution, a plurality of layout paths can be displayed separately, and the second layout path can be accurately selected.

Optionally, determining the switched layout path in response to the layout switch trigger operation may include: determining the switched layout path based on the first layout path and a preset switching rule in response to a control trigger operation performed on a layout switching control, where the preset switching rule is to randomly switch among a plurality of preset layout paths or sequentially switch according to a preset switching order corresponding to the plurality of preset layout paths. With the technical solution, the user can be supported to quickly preview the layout effects corresponding to the plurality of layout paths, and the operation manner is simple, which can save the time of the user to search for the layout path, and display of the effects of the plurality of layout paths can be achieved by one-click switching.

In another optional implementation of the embodiment of the present disclosure, determining the text to be laid out corresponding to the text to be processed and the second layout path corresponding to the text to be laid out in response to the character layout trigger operation input for the text to be processed may include: displaying a text bounding box corresponding to the first layout path, and using the text to be processed in the text bounding box as the text to be laid out; and determining, in response to a size adjustment trigger operation performed on the text bounding box, the second layout path corresponding to the text to be laid out based on adjusted size information of the text bounding box. With the technical solution, the effect of adjusting the layout path corresponding to the text to be laid out by adjusting the text bounding box can be achieved, and the operation can be simple and convenient, flexible adjustment of the layout path can be achieved, the text to be laid out can be reasonably arranged in the text bounding box, and the text layout effect can be improved.

The text bounding box may be understood as a bounding box that surrounds at least some text characters of the text to be processed. In some scenarios, it may be a text selection box corresponding to the text to be processed. Optionally, displaying the text bounding box corresponding to the first layout path may include: after detecting that the added text to be processed is displayed in the text editing interface in the first layout path, displaying a text bounding box that surrounds all text characters of the text to be processed; or acquiring selected text characters in the text to be processed, generating a bounding box that surrounds the selected text characters, and displaying the bounding box as the text bounding box.

In the embodiment of the present disclosure, the size adjustment trigger operation may be understood as an operation triggered to adjust the size of the text bounding box. For example, the size adjustment trigger operation may be a size adjustment operation for the text bounding box in a preset direction, and/or an operation to proportionally scale the size of the text bounding box. In a case where the text bounding box has a symmetric structure, the preset direction may be a direction in which parallel sides of the text bounding box are located. For example, if the text bounding box is rectangular, the preset direction may include a width direction and/or a height direction. In a case where the text bounding box has an asymmetric structure, the size adjustment trigger operation may be an operation to proportionally scale the size of the text bounding box.

In the embodiment of the present disclosure, after the size adjustment trigger operation performed on the text bounding box is received, the second layout path corresponding to the text to be laid out may be determined based on the adjusted size information of the text bounding box. Specifically, path change information of the first layout path may be determined based on the adjusted size information of the text bounding box. Then, the second layout path corresponding to the text to be laid out may be determined based on the path change information. The path change information may at least include radius change information, curvature change information, and/or length change information of a path forming curve corresponding to the first layout path. With the technical solution, the size of the text bounding box can be associated with the change of the layout path, the matching between the text bounding box and the layout path can be improved, and the layout effect of the text to be laid out in the text bounding box can be ensured.

Optionally, determining the path change information of the first layout path based on the adjusted size information of the text bounding box may include: determining a path change proportion of the path change information of the first layout path based on a bounding box size change proportion, where the bounding box size change proportion is determined based on size information of the adjusted text bounding box relative to that of unadjusted text bounding box, and determining the second layout path corresponding to the text to be laid out based on the path change proportion. The path change proportion may include a radius change proportion, a curvature change proportion, and/or a length change proportion.

For example, determining the path change proportion of the path change information of the first layout path based on the bounding box size change proportion may include: determining the bounding box size change proportion as the path change proportion of the path change information of the first layout path, or obtaining the path change proportion of the path change information of the first layout path by multiplying the bounding box size change proportion by a preset adjustment coefficient.

For example, in a case where the first layout path is a path including a linear curve, when the size information or size change information of the text bounding box reaches a preset condition, the first layout path may be adjusted to an arc curve, and the arc curve may be used as the second layout path. In this case, in a case where the path change proportion is the radius change proportion, a second radius corresponding to the second layout path may be obtained by multiplying a first radius of the first layout path by the radius change proportion, and the second layout path may be determined based on the second radius.

It should be noted that the size information of the text bounding box in one preset direction may be adjusted separately, and the size information of the text bounding box in other directions may be kept unchanged. Alternatively, the size information of the text bounding box in one preset direction may be adjusted to adaptively adjust the size information of the text bounding box in other directions proportionally, that is, proportional scaling may be achieved.

For example, as shown in FIG. 1B, the text to be laid out is " 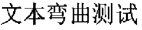 yydsig", and the first layout path may be the arrangement track of the text characters " 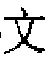 ", " 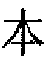 ", " 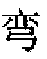 ", " 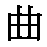 ", " 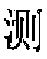 ", " 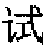 ", "y", "y", "d", "s", "i", and "g", that is, a path including a linear curve. In a case where the text bounding box (the white rectangle marked in the figure) surrounding the text to be laid out is adjusted, it may be changed to the arc-shaped layout path (i.e., the second layout path) in FIG. 1C and FIG. 1D. The bending direction of the arc-shaped layout path may be preset or determined according to the change direction of the edge line when the text bounding box is adjusted.

In the embodiment of the present disclosure, optionally, after in response to the size adjustment trigger operation performed on the text bounding box, the method further may include adjusting a font size and/or character spacing of the text characters in the text to be laid out. With the technical solution, the display information of a single text character can be adjusted by adjusting the text bounding box, and the adjustment manners of the text characters can be enriched.

Optionally, in a case where the size information of the text bounding box in the extending direction of the first layout path is separately adjusted, the length of the first layout path may be adjusted, and the shape of the first layout path may be kept unchanged.

Optionally, in a case where the size information of the text bounding box is adjusted by proportional scaling, the length of the first layout path may be kept unchanged, and the shape of the first layout path may be adjusted to obtain the second layout path.

In the embodiment of the present disclosure, in a case where the superimposed layout path is adjusted through the text bounding box, richer text layout effects may be achieved.

At block S 130, the text to be laid out is displayed in the second layout path in the text editing interface.

After the second layout path to be used for the text to be laid out is determined, target layout text obtained after the text to be laid out is laid out in the second layout path may be determined, and then, the target layout text may be rendered and displayed in the text editing interface.

Optionally, after the text to be laid out is laid out in the second layout path, the position displayed in the text editing interface may be determined based on the position before layout. For example, in a case where the text to be laid out is the entire text of the text to be processed, a text center position or a text endpoint position of the text to be processed may be determined, and after a text center position of the target layout text obtained after the layout is aligned with the text center position or the text endpoint position of the text to be processed, the target layout text may be displayed. The text endpoint position may be a character layout position of a text start character or a text end character of the text to be processed in the first layout path.

It should be noted that after the text to be laid out is displayed in the text editing interface in the second layout path, the display position of the text to be laid out in the text editing interface may be adjusted in response to a position adjustment trigger operation for the text to be laid out. For example, the position adjustment operation may be an operation of dragging the text to be laid out, or a control trigger operation performed on a preset moving direction control.

It is noted that in the embodiment of the present disclosure, the first layout path and/or the second layout path may include at least one curved path. In other words, the first layout path and/or the second layout path may be a path including one or more curved paths. The advantage of such setting is that the layout path can present rich and changeable visual effects, and more layout manners can be supported to match diverse layout needs of the user.

The curved path may include a linear path, an arc path, a quadratic Bezier curve path, a Bezier curve path, or the like. The first layout path and/or the second layout path may be a single-form layout path, or may be a layout path including curved paths of a plurality of forms. For example, it may be a right-angle path, a groove-shaped path, a rectangular path, or a square-wave-shaped path including two linear paths, or an arch bridge-shaped path including two linear curved paths and an arc path connected in the middle.

In the embodiment of the present disclosure, after the text to be laid out is laid out in the second layout path, one or more text display effects may be superimposed and the laid-out text to be laid out may be displayed in the text editing interface. The text display effect may include, but is not limited to, one or more of a text stroke effect, a text shadow effect, a text glow effect, and a text animation effect.

In the technical solutions of the embodiments of the present disclosure, the added text to be processed is displayed in the text editing interface in the first layout path in response to the text adding trigger operation, which provides the text adding function, and the layout effect of the text to be processed may be presented in the first layout path without additional layout settings, ensuring the display effect after the text to be processed is added. Then, the text to be laid out corresponding to the text to be processed and the second layout path corresponding to the text to be laid out are determined in response to the character layout trigger operation input for the text to be processed, such that the layout path that satisfies the needs of the user can be accurately acquired through the user operation, and some or all of the text characters in the text to be processed can be flexibly laid out. Finally, the text to be laid out is displayed in the text editing interface in the second layout path, such that the layout effect after adjustment to the second layout path can be intuitively presented. Moreover, the first layout path and/or the second layout path may include one or more curved paths, which can implement diversification of the layout paths and provide more choices for the user. The technical problem of poor layout effect and low matching degree with the video caused by the single layout path can be solved, the layout path of the text to be processed can be adjusted easily and conveniently, and diversified presentation of text layout styles can be achieved, enriching the visual effects of the text.

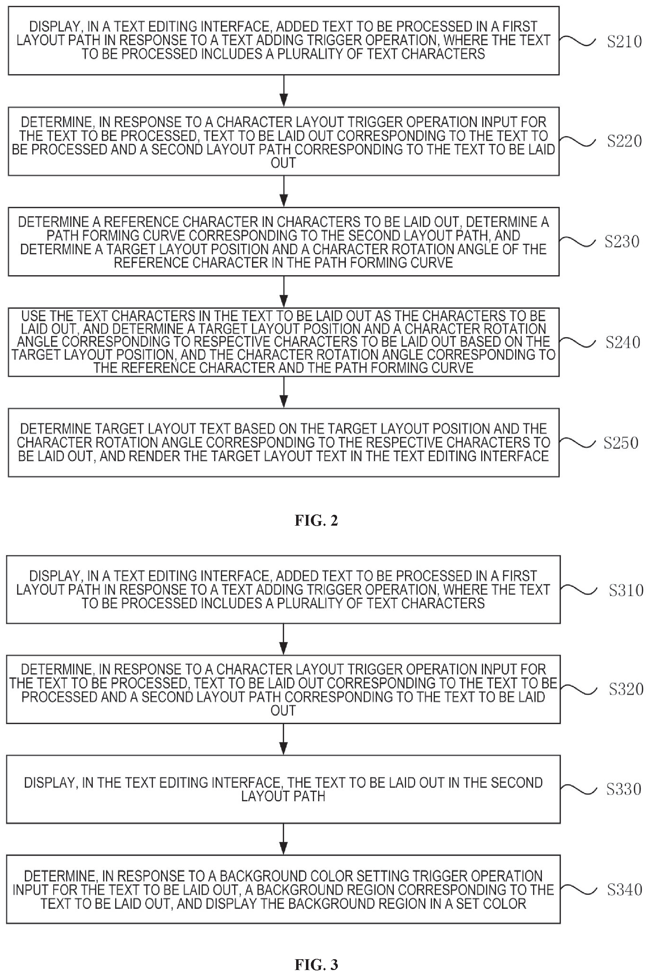

FIG. 2 is a schematic flowchart of another method for text processing according to an embodiment of the present disclosure. Based on the technical solution of the above embodiment, the technical solution of this embodiment further details how to lay out the text to be laid out in the second layout path for display. Optionally, displaying the text to be laid out in the second layout path in the text editing interface includes: determining a reference character in characters to be laid out, determining a path forming curve corresponding to the second layout path, and determining a target layout position and a character rotation angle of the reference character in the path forming curve; using the text characters in the text to be laid out as the characters to be laid out, and determining a target layout position and a character rotation angle corresponding to the respective characters to be laid out based on the path forming curve, and the target layout position and the character rotation angle corresponding to the reference character; and determining target layout text based on the target layout position and the character rotation angle corresponding to the respective characters to be laid out, and rendering the target layout text in the text editing interface. For the specific implementation, reference may be made to the description of this embodiment. The technical features the same as or similar to those of the foregoing embodiment are not repeated herein.

As shown in FIG. 2, the method of this embodiment may specifically include the following steps.

At block S210, added text to be processed is displayed in a first layout path in a text editing interface in response to a text adding trigger operation, where the text to be processed includes a plurality of text characters.

At block S220, in response to a character layout trigger operation input for the text to be processed, text to be laid out corresponding to the text to be processed and a second layout path corresponding to the text to be laid out are determined.

At block S230, a reference character in characters to be laid out is determined, a path forming curve corresponding to the second layout path is determined, and a target layout position and a character rotation angle of the reference character in the path forming curve are determined.

As mentioned above, the path forming curve may be a straight line, an arc, a quadratic Bezier curve, or a cubic Bezier curve. For example, in a case where the second layout path corresponding to the text to be laid out is determined, the path forming curve corresponding to the second layout path is first determined. The path forming curve may be understood as each curved path that composes the second layout path. Specifically, the second layout path may be parsed to determine each path forming curve corresponding to the second layout path. By determining the path forming curve corresponding to the second layout path, the second layout path may be parsed to achieve precise layout of the path forming curve corresponding to the second layout path.

Specifically, determining the reference character in the characters to be laid out may include: determining a first character to be laid out to be laid out in the text to be laid out, and using the first character to be laid out to be laid out as the reference character; and determining a start layout position of the arc curve, and using the start layout position as the target layout position corresponding to the reference character. Alternatively, a previous character to be laid out adjacent to a current character to be laid out may be used as the reference character corresponding to the current character to be laid out.

The first character to be laid out to be laid out may be a first text character, a last text character, a set text character (a text character determined based on a selection sequence of text characters, such as a first selected text character) in the text to be processed, or a text character located at the text center position. The start layout position may be a curve start position, a curve center position, a preset curve position, or a curve end position of the arc curve.

At block S240, the text characters in the text to be laid out is used as characters to be laid out, and a target layout position and a character rotation angle corresponding to respective characters to be laid out are determined based on the target layout position and the character rotation angle corresponding to the reference character and the path forming curve.

Optionally, in a case where the path forming curve is an arc curve, determining a text layout length of the text to be laid out in the arc curve; determining the target layout position corresponding to the respective characters to be laid out based on character spacing between the characters to be laid out and a central angle of the arc curve; and determining the character rotation angle corresponding to the respective characters to be laid out based on the text layout length, the character spacing between the characters to be laid out, and the central angle of the arc curve. In the embodiment of the present disclosure, an independent algorithm is provided for the arc curve, which is not calculated as a Bezier curve, such that the calculation manners can be simplified, and the layout efficiency can be improved while ensuring the layout effect of the text to be laid out.

The text layout length may be understood as the text length of the text to be laid out after being laid out according to the path forming curve. The text length may be understood as the sum of character spacing between every two adjacent text characters from the first text character to the last text character of the text. Optionally, the character spacing may be the spacing between the center points of the text characters. Taking the text "ABCDE" as an example, the first character spacing between A and B, the second character spacing between B and C, the third character spacing between C and D, and the fourth character spacing between D and E in the second layout path may be determined, and the first character spacing, the second character spacing, the third character spacing, and the fourth character spacing may be added to obtain the text length of the text "ABCDE".

In the embodiment of the present disclosure, determining the text layout length corresponding to the text to be laid out based on the arc curve may include: acquiring the text layout length corresponding to the text to be laid out in a reference layout path; and using the text layout length corresponding to the text to be laid out in the reference layout path as the text layout length of the text to be laid out in the arc curve, or adjusting the text layout length corresponding to the text to be laid out in the reference layout path, and obtaining the text layout length of the text to be laid out in the arc curve. It may be understood that the manner of adjusting the text layout length corresponding to the text to be laid out in the reference layout path may be associated with the arc curve, and which adjustment manner is specifically used may be set according to actual needs, for example, increasing by a preset a plurality of, reducing by a preset proportion, increasing by a preset spacing value, or reducing by a preset spacing value, etc.

In some scenes, the length of the path forming curve may be preset. Furthermore, the text layout length corresponding to the text to be laid out in the reference layout path may be compared with the preset curve length of the path forming curve, and the smaller length may be used as the text layout length of the text to be laid out in the path forming curve.

Optionally, in the case where the path forming curve is the arc curve, determining the character rotation angle corresponding to the respective characters to be laid out based on the text layout length, the character spacing between the characters to be laid out, and the central angle of the arc curve may include: determining an interval arc length between the character to be laid out and the reference character based on the character spacing between the character to be laid out and the reference character and the central angle; and determining a relative rotation angle of the character to be laid out relative to the reference character based on the interval arc length and the text layout length, and determining the character rotation angle of the character to be laid out based on the relative rotation angle. With the technical solution, the character rotation angle of the character to be laid out can be quickly and easily determined, the computing power space of the electronic device that executes the method for text processing can be saved, and the layout efficiency can be improved.

Specifically, determining the relative rotation angle of the character to be laid out relative to the reference character based on the interval arc length and the text layout length includes: using a ratio of the interval arc length to the text layout length as a central angle proportion, and determining the relative rotation angle of the character to be laid out relative to the reference character based on the central angle corresponding to the path forming curve and the central angle proportion. For example, the product of the central angle and the central angle proportion may be used as the relative rotation angle of the character to be laid out relative to the reference character.

Specifically, determining the target layout position corresponding to the respective characters to be laid out based on the text layout length, the character spacing between the characters to be laid out, and the central angle of the arc curve may include: determining the interval arc length between the character to be laid out and the reference character based on the character spacing between the character to be laid out and the reference character and the central angle; and determining the target layout position corresponding to the character to be laid out based on the interval arc length and the target layout position of the reference character in the arc curve.

Considering that when the arc curve or the Bezier curve is used for layout, the layout path of the text to be laid out bends, which may cause the overlap or jump of the text characters, especially in the scene of rich text. Therefore, the arc curve or the Bezier curve may be adjusted or the target layout position of the character to be laid out may be adjusted to increase the spacing between the characters to be laid out, thereby solving the above problem and enabling the text to be laid out to present a better layout effect.

Taking the path forming curve as the arc curve as an example, the target layout position of the character to be laid out may be adjusted in the following manner. After determining the target layout position and the character rotation angle corresponding to the respective characters to be laid out based on the text layout length, the character spacing between the characters to be laid out, and the central angle of the arc curve, the method further includes: in response to a bending direction of the arc curve being a preset direction, adjusting the target layout position corresponding to the respective characters to be laid out by a preset offset distance in a direction away from the bending direction, and updating an adjusted position of the character to be laid out to the target layout position corresponding to the character to be laid out.

The bending direction may include upward bending and downward bending. The preset direction may be upward bending and/or downward bending.

For example, in the case where the bending direction of the arc curve is the preset direction, the normal at the target layout position corresponding to the respective characters to be laid out may be determined first, and then, the target layout position corresponding to the respective characters to be laid out may be adjusted by the preset offset distance in the direction of the normal away from the bending direction.

With the above technical solution, the spacing between the characters to be laid out can be effectively increased, and the technical solution can be especially suitable for the scene where the text to be laid out includes a plurality of lines of sub-text, which can enable the text to be laid out to present a better layout effect.

Optionally, the arc curve or the Bezier curve may be adjusted in the following manner. Before determining the target layout position and the character rotation angle corresponding to the respective characters to be laid out based on the text layout length, the character spacing between the characters to be laid out, and the central angle of the arc curve, the method further includes: in response to the text to be laid out comprising a plurality of lines of sub-text, adjusting a radius of the arc curve corresponding to respective lines of sub-text to increase spacing between the sub-texts, and updating the arc curve based on the adjusted radius.

Specifically, adjusting the radius of the arc curve corresponding to respective lines of the sub-text may include: determining the radius of the arc curve based on the central angle of the arc curve, using the radius as the radius corresponding to the first line of sub-text, and determining, for the sub-text in the remaining lines, the radius corresponding to the sub-text in the current line based on the preset offset distance and the radius corresponding to the sub-text in the previous line. The advantage of such setting is that the overall layout effect of the text to be laid out can be ensured while ensuring the single-character display effect of the characters to be laid out. It may be especially suitable for the case where rich text is generated and displayed by superimposing a plurality of text display effects.

In some scenes, the second layout path may include a Bezier curve, that is, the path forming curve includes the Bezier curve. In this case, determining the target layout position and the character rotation angle corresponding to the respective characters to be laid out based on the path forming curve, and the target layout position and the character rotation angle corresponding to the reference character may include: in response to the path forming curve being the Bezier curve, determining the target layout position and the character rotation angle corresponding to the characters to be laid out one by one through a Newton interpolation approximation algorithm. With the technical solution, it may be ensured that the layout effect of the plurality of characters to be laid out fits the trajectory of the Bezier curve and the character spacing between the characters to be laid out may be ensured, thereby ensuring the layout effect of the text to be laid out.

Specifically, in the case where the path forming curve is the Bezier curve, the target layout position of the current character to be laid out on the Bezier curve may be calculated through the Newton interpolation approximation algorithm according to the character distance between the target layout position corresponding to the previous character to be laid out and the current character to be laid out, such that the target layout position corresponding to the respective characters to be laid out may be determined one by one.

Furthermore, the character rotation angle corresponding to the character to be laid out may be determined based on the target layout position corresponding to the character to be laid out. Specifically, the character rotation angle corresponding to the character to be laid out may be determined based on an angle between a normal at the target layout position of the character to be laid out on the Bezier curve and a reference baseline. The reference baseline may be a preset reference baseline, such as a preset horizontal line, or may be a reference baseline determined based on the target layout position and the character rotation angle of the previous character to be laid out of the current character to be laid out. Alternatively, the relative rotation angle between the current character to be laid out and the previous character to be laid out may be first determined, and then the character rotation angle corresponding to the current character to be laid out may be determined based on the character rotation angle corresponding to the previous character to be laid out and the relative rotation angle.

At block S250, target layout text is determined based on the target layout position and the character rotation angle corresponding to the respective characters to be laid out, and the target layout text is rendered in the text editing interface.

When the target layout position and the character rotation angle corresponding to the respective characters to be laid out in the text to be laid out are determined, the respective characters to be laid out may be arranged according to the target layout position and the character rotation angle corresponding to the character to be laid out to obtain the target layout text. Then, the target layout text may be rendered in the text editing interface.

In the embodiment of the present disclosure, rendering the target layout text in the text editing interface may include: determining a text width corresponding to the target text, and updating size information of a text layout box corresponding to the target text and size information of a text drawing container based on the text width; and rendering, in the text editing interface, the target layout text based on the text layout box and the text drawing container of which the size information is updated.

It may be understood that the rendering of the target layout text further includes related rendering logic, such as texture updating, mesh calculation, and material updating for the target layout text. On this basis, animation after-effect processing may also be added to the target layout text. The specific rendering logic may be implemented according to the prior art, and details are not described herein.

In the technical solution of the embodiment of the present disclosure, the reference character in the characters to be laid out is determined, the path forming curve corresponding to the second layout path is determined, and the target layout position and the character rotation angle of the reference character in the path forming curve are determined. Then, the text characters in the text to be laid out are used as the characters to be laid out, and the target layout position and the character rotation angle corresponding to the respective characters to be laid out are determined based on the path forming curve, and the target layout position and the character rotation angle corresponding to the reference character, such that the character layout information on each path forming curve may be determined separately, thereby ensuring a high degree of matching between the target layout position and the character rotation angle of the characters to be laid out and the path forming curve. Finally, the target layout text is determined based on the target layout position and the character rotation angle corresponding to the respective characters to be laid out, and the target layout text is rendered in the text editing interface, thereby ensuring the layout effect of the target layout text obtained after the layout in the second layout path.

FIG. 3 is a schematic flowchart of a method for text processing according to a yet further embodiment of the present disclosure. Based on the technical solution of the above embodiment, the technical solution of this embodiment adds the layout setting of to-be-laid-out words. Optionally, after displaying the text to be laid out in the second layout path in the text editing interface, the method further includes: determining, in response to a background color setting trigger operation input for the text to be laid out, a background region corresponding to the text to be laid out, and displaying the background region in a set color. For the specific implementation, reference may be made to the description of this embodiment. The technical features the same as or similar to those of the foregoing embodiment are not repeated herein.

As shown in FIG. 3, the method in the embodiment of the present disclosure may specifically include the following steps.

At block S310, added text to be processed is displayed in a first layout path in a text editing interface in response to a text adding trigger operation, where the text to be processed includes a plurality of text characters.

At block S320, in response to a character layout trigger operation input for the text to be processed, text to be laid out corresponding to the text to be processed and a second layout path corresponding to the text to be laid out are determined.

At block S330, the text to be laid out is displayed in the second layout path in the text editing interface.

At block S340, in response to a background color setting trigger operation input for the text to be laid out, a background region corresponding to the text to be laid out is determined, and the background region is displayed in a set color.

The background color setting trigger operation may be understood as an operation triggered to set the background color of the text to be laid out. The text to be laid out here may be understood as the text displayed in the second layout path. The background region may be understood as the remaining region other than the text to be laid out in the target region corresponding to the text to be laid out.

In the embodiment of the present disclosure, the background color setting trigger operation may be generated in a plurality of manners. For example, the background color setting trigger operation input for the text to be laid out may be that a color setting control is displayed in the text editing interface, and in a case where the text to be laid out is in a selected state, the background color setting trigger operation is in response to a control trigger operation performed on the color setting control. The color setting control may be a single color selection control corresponding to each color, or a color switching control that switches among a plurality of colors according to a preset switching strategy. The preset switching rule may be sequential switching according to an arrangement order of the plurality of colors or random switching among the plurality of colors.

Optionally, determining the background region corresponding to the text to be laid out may include determining a text background box corresponding to the text to be laid out based on the second layout path, and using a region surrounded by the text background box as the background region corresponding to the text to be laid out.

In a case where the text to be laid out includes a plurality of lines of sub-text, the text background box may be an overall background box corresponding to all the sub-text of the text to be laid out or a line background box corresponding to a single line of sub-text. Optionally, a background box setting control corresponding to the second path curve may be displayed in the text editing interface, and in a case where the text to be laid out includes a plurality of lines of sub-text and the plurality of lines of sub-text are in a selected state, the text background box corresponding to the text to be laid out may be determined in response to a control trigger operation performed on the background box setting control. The color setting control may include selection controls corresponding to the overall background box and the single line background box, respectively, or a color switching control that switches between the overall background box and the single line background box. The advantage of such setting is that the form of the text background box can be selected easily and conveniently, flexible setting of the file background box can be supported, and the user needs can be accurately responded to through simple interaction operations.

As an optional technical solution of the embodiment of the present disclosure, a path start point and a path end point of the second layout path may be determined, and the text background box corresponding to the text to be laid out may be determined based on the path start point and the path end point. The text background box may include the path start point and the path end point. The advantage of such setting is that the length of the text background box can match the length of the second layout path, forming an enclosure effect. Optionally, the shape of the text background box can match the shape of the second layout path, or it may be a preset shape, such as a rectangle or a circle.

Based on the above technical solution, the method for text processing may further include updating, in response to a size adjustment operation input for the text background box, the text background box based on an adjusted size parameter. The size parameter may include one or more of parameters such as width, length, and scaling proportion. With the technical solution, the flexible adjustment of the size of the text background box can be achieved to present different interaction effects with the text to be laid out, thereby enriching the display effect of the text to be laid out.

In the technical solution of the embodiment of the present disclosure, the background region corresponding to the text to be laid out is determined in response to the background color setting trigger operation input for the text to be laid out, and the background region is displayed in the set color, such that the text to be laid out can be highlighted by setting the color of the background region, and the color effect of the background region may be superimposed on the effect after the text to be laid out is laid out, making the display effect of the text to be laid out more diversified.

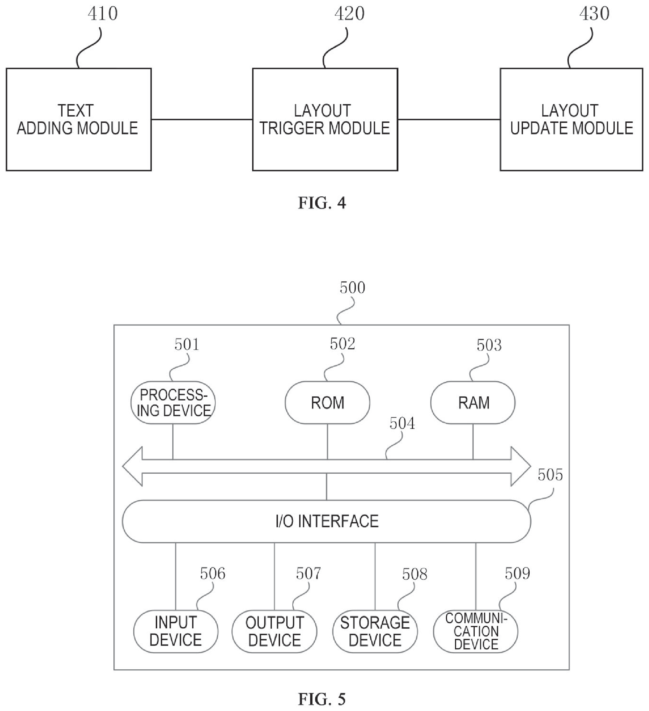

FIG. 4 is a schematic structural diagram of an apparatus for text processing according to an embodiment of the present disclosure. As shown in FIG. 4, the apparatus includes: a text adding module 410, a layout trigger module 420, and a layout update module 430.

The text adding module 410 is configured to display, in a text editing interface, added text to be processed in a first layout path in response to a text adding trigger operation, where the text to be processed includes a plurality of text characters. The layout trigger module 420 is configured to determine, in response to a character layout trigger operation input for the text to be processed, text to be laid out corresponding to the text to be processed and a second layout path corresponding to the text to be laid out, where the text to be laid out is text including some or all of the text characters in the text to be processed. The layout update module 430 is configured to display, in the text editing interface, the text to be laid out in the second layout path, where the first layout path and/or the second layout path include at least one curved path.

In the technical solutions of the embodiments of the present disclosure, the added text to be processed is displayed in the text editing interface in the first layout path in response to the text adding trigger operation, which provides the text adding function, and the layout effect of the text to be processed may be presented in the first layout path without additional layout settings, ensuring the display effect after the text to be processed is added. Then, the text to be laid out corresponding to the text to be processed and the second layout path corresponding to the text to be laid out are determined in response to the character layout trigger operation input for the text to be processed, such that the layout path that meets the needs of the user can be accurately acquired through the user operation, and some or all of the text characters in the text to be processed can be flexibly laid out. Finally, the text to be laid out is displayed in the text editing interface in the second layout path, such that the layout effect after adjustment to the second layout path can be intuitively presented. Moreover, the first layout path and/or the second layout path may include one or more curved paths, which can implement diversification of the layout paths and provide more choices for the user. The technical problem of poor layout effect and low matching degree with the video caused by the single layout path can be solved, the layout path of the text to be processed can be adjusted easily and conveniently, and diversified presentation of text layout styles can be achieved, enriching the visual effects of the text.

Based on the above optional technical solutions, optionally, the layout trigger module 420 includes: a character selection unit and a layout switching unit. The character selection unit is configured to use, in response to a character selection trigger operation input for at least some of the text characters in the text to be processed, text including the selected text characters as the text to be laid out. The layout switching unit is configured to determine, in response to a layout switch trigger operation input for the text to be laid out, a switched layout path and use the switched layout path as the second layout path corresponding to the text to be laid out.

Based on the above optional technical solutions, optionally, the layout switching unit is configured to: in response to a plurality of layout path identifications being displayed in the text editing interface, determine, in response to an identification selection operation for a layout path identification, a preset layout path corresponding to the selected layout path identification as the switched layout path; or, determine the switched layout path based on the first layout path and a preset switching rule in response to a control trigger operation performed on a layout switching control, where the preset switching rule is to randomly switch among a plurality of preset layout paths or sequentially switch according to a preset switching order corresponding to the plurality of preset layout paths.

Based on the above optional technical solutions, optionally, the layout trigger module 420 includes: a bounding box display unit and a path determination unit. The bounding box display unit is configured to display a text bounding box corresponding to the first layout path and use the text to be processed in the text bounding box as the text to be laid out. The path determination unit is configured to determine, in response to a size adjustment trigger operation performed on the text bounding box, the second layout path corresponding to the text to be laid out based on adjusted size information of the text bounding box.

Based on the above optional technical solutions, optionally, the path determination unit may be further configured to: determine path change information of the first layout path based on the adjusted size information of the text bounding box, and determine the second layout path corresponding to the text to be laid out based on the path change information, where the path change information includes at least one of radius change information, curvature change information, or length change information of a path forming curve corresponding to the first layout path.

Based on the above optional technical solutions, optionally, the path determination unit is further configured to: after responding to the size adjustment trigger operation performed on the text bounding box, adjust a font size and/or character spacing of text characters in the text to be laid out.

Based on the above optional technical solutions, optionally, the layout update module 430 includes: a reference character determination unit, a layout information determination unit, and a layout effect display unit. The reference character determination unit is configured to determine a reference character in the characters to be laid out, determine a path forming curve corresponding to the second layout path, and determine a target layout position and a character rotation angle of the reference character in the path forming curve. The layout information determination unit is configured to use the text characters in the text to be laid out as characters to be laid out, and determine a target layout position and a character rotation angle corresponding to the respective characters to be laid out based on the path forming curve, and the target layout position and the character rotation angle corresponding to the reference character. The layout effect display unit is configured to determine target layout text based on the target layout position and the character rotation angle corresponding to the respective characters to be laid out, and render the target layout text in the text editing interface.

Based on the above optional technical solutions, optionally, the layout information determination unit includes: a text length determination unit, a layout position determination subunit, and a rotation angle determination subunit. The text length determination unit is configured to in response to the path forming curve being an arc curve, determine a text layout length of the text to be laid out in the arc curve. The layout position determination subunit is configured to determine the target layout position corresponding to the respective characters to be laid out based on character spacing between the characters to be laid out and a central angle of the arc curve. The rotation angle determination subunit is configured to determine the character rotation angle corresponding to the respective characters to be laid out based on the text layout length, the character spacing between the characters to be laid out, and the central angle of the arc curve.

Based on the above optional technical solutions, optionally, the rotation angle determination subunit is configured to: determine an interval arc length between the character to be laid out and the reference character based on the character spacing between the character to be laid out and the reference character and the central angle; and determine a relative rotation angle of the character to be laid out relative to the reference character based on the interval arc length and the text layout length, and determine the character rotation angle of the character to be laid out based on the relative rotation angle.

Based on the above optional technical solutions, optionally, the apparatus for text processing further includes: a character layout position adjustment module configured to: after determining the target layout position and the character rotation angle corresponding to the respective characters to be laid out based on the text layout length, the character spacing between the characters to be laid out and the central angle of the arc curve, in response to a bending direction of the arc curve being a preset direction, adjust the target layout position corresponding to the respective characters to be laid out by a preset offset distance in a direction away from the bending direction, and update an adjusted position of the character to be laid out to the target layout position corresponding to the character to be laid out.

Based on the above optional technical solutions, optionally, the apparatus for text processing further includes: a layout path adjustment module configured to: before determining the target layout position and the character rotation angle corresponding to the respective characters to be laid out based on the text layout length, the character spacing between the characters to be laid out and the central angle of the arc curve, in response to the text to be laid out comprising a plurality of lines of sub-text, adjust a radius of the arc curve corresponding to respective lines of sub-text to increase spacing between the sub-texts, and updating the arc curve based on the adjusted radius.

Based on the above optional technical solutions, optionally, the layout information determination unit is configured to: in response to the path forming curve being a Bezier curve, determine the target layout position and the character rotation angle corresponding to the characters to be laid out one by one through a Newton interpolation approximation algorithm.

Based on the above optional technical solutions, optionally, the apparatus for text processing further includes: a background color setting module configured to: after displaying the text to be laid out in the second layout path in the text editing interface, determine, in response to a background color setting trigger operation input for the text to be laid out, a background region corresponding to the text to be laid out, and display the background region in a set color.

Based on the above optional technical solutions, optionally, the background color setting module is further configured to: determine, based on the second layout path, a text background box corresponding to the text to be laid out, and use an area enclosed by the text background box as the background region corresponding to the text to be laid out, where in a case where the text to be laid out includes a plurality of lines of sub-text, the text background box is an overall background box corresponding to all the sub-text of the text to be laid out or a line background box corresponding to a single line of sub-text.

The apparatus for text processing provided by the embodiment of the present disclosure may execute the method for text processing provided by any embodiment of the present disclosure, and has corresponding functional modules and beneficial effects for executing the method.

It should be noted that the units and modules included in the above apparatus are only divided according to functional logic, but are not limited to the above division, as long as the corresponding functions may be realized. In addition, the specific names of the functional units are only for the convenience of distinguishing from each other, and are not used to limit the scope of protection of the embodiments of the present disclosure.

FIG. 5 is a schematic structural diagram of an electronic device according to an embodiment of the present disclosure. Reference is made to FIG. 5 below, which illustrates a schematic structural diagram of an electronic device (e.g., a terminal device or a server in FIG. 5) 500 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable media player (PMP), a vehicle-mounted terminal (e.g., a vehicle navigation terminal), etc., and fixed terminals such as a digital TV, a desktop computer, etc. The electronic device shown in FIG. 5 is only an example, and should not impose any limitation on the functions and scope of use of the embodiments of the present disclosure.

As shown in FIG. 5, the electronic device 500 may include a processing device (e.g., a central processing unit, a graphics processor, etc.) 501 that may perform various appropriate actions and processes according to a program stored in a read-only memory (ROM) 502 or a program loaded from a storage device 508 into a random access memory (RAM) 503. The RAM 503 further stores various programs and data required for operations of the electronic device 500. The processing device 501, the ROM 502, and the RAM 503 are interconnected by means of a bus 504. An editing/output (I/O) interface 505 is also connected to the bus 504.

Typically, the following devices may be connected to the I/O interface 505: an input device 506 including, for example, a touch screen, a touchpad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to be in wireless or wired communication with other devices to exchange data. While FIG. 5 shows the electronic device 500 with various devices, it should be understood that not all of the illustrated devices are necessarily implemented or included. More or fewer devices may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, and the computer program includes program code for performing the method shown in the flowchart. In such an embodiment, the computer program may be downloaded and installed from a network via the communication device 509, or installed from the storage device 508, or installed from the ROM 502. When the computer program is executed by the processing device 501, the above-mentioned functions defined in the method of the embodiments of the present disclosure are executed.

The names of messages or information exchanged between a plurality of devices in the implementations of the present disclosure are only for illustrative purposes, and are not intended to limit the scope of these messages or information.

The electronic device provided by the embodiment of the present disclosure belongs to the same inventive concept as the method for text processing provided by the above embodiment. For technical details not described in detail in this embodiment, reference may be made to the above embodiment, and this embodiment has the same beneficial effects as the above embodiment.

An embodiment of the present disclosure provides a computer storage medium having a computer program stored thereon, where the program, when executed by a processor, implements the method for text processing provided by the above embodiment.

It should be noted that the above computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, device, device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, device, or device. In the present disclosure, the computer-readable signal medium may include a data signal propagated on a baseband or as a part of a carrier, and computer-readable program code is carried therein. This propagated data signal may take a plurality of forms, including, but not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, device, or device. The program code contained on the computer-readable medium may be transmitted in any suitable medium, including, but not limited to a wire, an optical cable, a radio frequency (RF), etc., or any suitable combination thereof.

In some implementations, a client and a server may communicate using any currently known or future developed network protocol, such as the hypertext transfer protocol (HTTP), and may be interconnected with any form or medium of digital data communication (e.g., a communication network). Examples of the communication network include a local area network ("LAN"), a wide area network ("WAN"), an internet (e.g., the Internet), a peer-to-peer network (e.g., an Ad-Hoc network), and any network currently known or to be developed in the future.

The above computer-readable medium may be included in the above electronic device, or may exist alone without being assembled into the electronic device.

The above computer-readable medium carries one or more programs that, when executed by the electronic device, cause the electronic device to: display, in a text editing interface, added text to be processed in a first layout path in response to a text adding trigger operation, where the text to be processed includes a plurality of text characters; determine, in response to a character layout trigger operation input for the text to be processed, text to be laid out corresponding to the text to be processed and a second layout path corresponding to the text to be laid out, where the text to be laid out is text including some or all of the text characters in the text to be processed; and display, in the text editing interface, the text to be laid out in the second layout path, where the first layout path and/or the second layout path include at least one curved path.

The computer program code for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be executed entirely on a user computer, partly on a user computer, as a stand-alone software package, partly on a user computer and partly on a remote computer, or entirely on a remote computer or server. In the case of the remote computer, the remote computer may be connected to the user computer through any kind of network, including a local area network (LAN) or a wide area network (WAN), or may be connected to an external computer (for example, connected by using Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. Here, the name of a unit does not constitute a limitation on the unit itself under certain circumstances, for example, the first acquisition unit may also be described as "a unit for acquiring at least two internet protocol addresses".

The functions described herein may be performed at least in part by one or more hardware logic components. For example, without limitation, example types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

According to one or more embodiments of the present disclosure, [Example 1] provides a method for text processing, including: displaying, in a text editing interface, added text to be processed in a first layout path in response to a text adding trigger operation, where the text to be processed includes a plurality of text characters; determining, in response to a character layout trigger operation input for the text to be processed, text to be laid out corresponding to the text to be processed and a second layout path corresponding to the text to be laid out, where the text to be laid out is text including some or all of the text characters in the text to be processed; and displaying, in the text editing interface, the text to be laid out in the second layout path, where the first layout path and/or the second layout path include at least one curved path.

According to one or more embodiments of the present disclosure, [Example 2] provides the method of Example 1, further including: optionally, determining the text to be laid out corresponding to the text to be processed and the second layout path corresponding to the text to be laid out in response to the character layout trigger operation input for the text to be processed includes: using, in response to a character selection trigger operation input for at least some of the text characters in the text to be processed, text including the selected text characters as the text to be laid out; and determining, in response to a layout switch trigger operation input for the text to be laid out, a switched layout path and using the switched layout path as the second layout path corresponding to the text to be laid out.

According to one or more embodiments of the present disclosure, [Example 3] provides the method of Example 2, further including: optionally, determining the switched layout path in response to the layout switch trigger operation includes: in response to a plurality of layout path identifications being displayed in the text editing interface, determining, in response to an identification selection operation for a layout path identification, a preset layout path corresponding to the selected layout path identification as the switched layout path; or determining the switched layout path based on the first layout path and a preset switching rule in response to a control trigger operation performed on a layout switching control, where the preset switching rule is to randomly switch among a plurality of preset layout paths or sequentially switch according to a preset switching order corresponding to the plurality of preset layout paths.

According to one or more embodiments of the present disclosure, [Example 4] provides the method of Example 1, further including: optionally, determining the text to be laid out corresponding to the text to be processed and the second layout path corresponding to the text to be laid out in response to the character layout trigger operation input for the text to be processed includes: displaying a text bounding box corresponding to the first layout path and using the text to be processed located in the text bounding box as the text to be laid out; and determining, in response to a size adjustment trigger operation performed on the text bounding box, the second layout path corresponding to the text to be laid out based on adjusted size information of the text bounding box.

According to one or more embodiments of the present disclosure, [Example 5] provides the method of Example 4, further including: optionally, determining the second layout path corresponding to the text to be laid out based on the adjusted size information of the text bounding box includes: determining path change information of the first layout path based on the adjusted size information of the text bounding box, and determining the second layout path corresponding to the text to be laid out based on the path change information, wherein the path change information comprises at least one of radius change information, curvature change information, or length change information of a path forming curve corresponding to the first layout path.

According to one or more embodiments of the present disclosure, [Example 6] provides the method of Example 4, further including: optionally, after responding to the size adjustment trigger operation performed on the text bounding box, further including: adjusting a font size and/or character spacing of the text characters in the text to be laid out.

According to one or more embodiments of the present disclosure, [Example 7] provides the method of Example 1, further including: optionally, determining a reference character in characters to be laid out, determining a path forming curve corresponding to the second layout path, and determining a target layout position and a character rotation angle of the reference character in the path forming curve; using the text characters in the text to be laid out as the characters to be laid out, and determining a target layout position and a character rotation angle corresponding to respective characters to be laid out based on the path forming curve, and the target layout position and the character rotation angle corresponding to the reference character; and determining target layout text based on the target layout position and the character rotation angle corresponding to the respective characters to be laid out, and rendering the target layout text in the text editing interface.

According to one or more embodiments of the present disclosure, [Example 8] provides the method of Example 7, further including: optionally, determining the target layout position and the character rotation angle corresponding to the respective characters to be laid out based on the path forming curve, and the target layout position and the character rotation angle corresponding to the reference character includes: in response to the path forming curve being an arc curve, determining a text layout length of the text to be laid out in the arc curve; determining the target layout position corresponding to the respective characters to be laid out based on character spacing between the characters to be laid out and a central angle of the arc curve; and determining the character rotation angle corresponding to the respective characters to be laid out based on the text layout length, the character spacing between the characters to be laid out and the central angle of the arc curve.

According to one or more embodiments of the present disclosure, [Example 9] provides the method of Example 8, further including: optionally, after determining the target layout position and the character rotation angle corresponding to the respective characters to be laid out based on the text layout length, the character spacing between the characters to be laid out, and the central angle of the arc curve, the method further includes: in response to a bending direction of the arc curve being a preset direction, adjusting the target layout position corresponding to the respective characters to be laid out by a preset offset distance in a direction away from the bending direction, and updating an adjusted position of the character to be laid out to the target layout position corresponding to the character to be laid out.

According to one or more embodiments of the present disclosure, [Example 10] provides the method of Example 8, further including: optionally, before determining the target layout position and the character rotation angle corresponding to the respective characters to be laid out based on the text layout length, the character spacing between the characters to be laid out, and the central angle of the arc curve, the method further includes: in response to the text to be laid out comprising a plurality of lines of sub-text, adjusting a radius of the arc curve corresponding to respective lines of sub-text to increase spacing between the sub-texts, and updating the arc curve based on the adjusted radius.

According to one or more embodiments of the present disclosure, [Example 11] provides the method of Example 1, further including: optionally, after displaying the text to be laid out in the second layout path in the text editing interface, the method further includes: determining, in response to a background color setting trigger operation input for the text to be laid out, a background region corresponding to the text to be laid out, and displaying the background region in a set color.

According to one or more embodiments of the present disclosure, [Example 12] provides the method of Example 11, further including: optionally, determining the background region corresponding to the text to be laid out includes: determining a text background box corresponding to the text to be laid out based on the second layout path, and using a region surrounded by the text background box as the background region corresponding to the text to be laid out, where in response to the text to be laid out comprising a plurality of lines of sub-text, the text background box is an overall background box corresponding to all the sub-texts of the text to be laid out or a line background box corresponding to a single line of sub-text.

According to one or more embodiments of the present disclosure, [Example 13] provides an apparatus for text processing, including: a text adding module configured to display, in a text editing interface, added text to be processed in a first layout path in response to a text adding trigger operation, where the text to be processed includes a plurality of text characters; a layout trigger module configured to determine, in response to a character layout trigger operation input for the text to be processed, text to be laid out corresponding to the text to be processed and a second layout path corresponding to the text to be laid out, where the text to be laid out is text including some or all of the text characters in the text to be processed; and a layout update module configured to display, in the text editing interface, the text to be laid out in the second layout path, where the first layout path and/or the second layout path include at least one curved path.

In the technical solutions of the embodiments of the present disclosure, the added text to be processed is displayed in the text editing interface in the first layout path in response to the text adding trigger operation, which provides the text adding function, and the layout effect of the text to be processed may be presented in the first layout path without additional layout settings, ensuring the display effect after the text to be processed is added. Then, the text to be laid out corresponding to the text to be processed and the second layout path corresponding to the text to be laid out are determined in response to the character layout trigger operation input for the text to be processed, such that the layout path that meets the needs of the user can be accurately acquired through the user operation, and some or all of the text characters in the text to be processed can be flexibly laid out. Finally, the text to be laid out is displayed in the text editing interface in the second layout path, such that the layout effect after adjustment to the second layout path can be intuitively presented. Moreover, the first layout path and/or the second layout path can include one or more curved paths, which can implement diversification of the layout paths and provides more choices for the user. The technical problem of poor layout effect and low matching degree with the video caused by the single layout path can solved, the layout path of the text to be processed can be adjusted easily and conveniently, and diversified presentation of text layout styles can be achieved, enriching the visual effects of the text.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above concept of disclosure. For example, a technical solution formed by replacing the above features with technical features with similar functions disclosed in the present disclosure (but not limited thereto) may be used.

In addition, although the various operations are depicted in a particular order, this should not be understood as requiring the operations to be performed in the particular order shown or in a sequential order. Under certain circumstances, multitasking and parallel processing may be advantageous. Similarly, although the above discussion contains several specific implementation details, these should not be construed as limitations on the scope of the present disclosure. Certain features described in the context of separate embodiments may also be implemented in combination in a single embodiment. Conversely, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely example forms of implementing the claims.

## Claims

1. A method for text processing, comprising:
displaying, in a text editing interface, added text to be processed in a first layout path in response to a text adding trigger operation, wherein the text to be processed comprises a plurality of text characters;
determining, in response to a character layout trigger operation input for the text to be processed, text to be laid out corresponding to the text to be processed and a second layout path corresponding to the text to be laid out, wherein the text to be laid out is text comprising some or all of the text characters in the text to be processed; and
displaying, in the text editing interface, the text to be laid out in the second layout path, wherein the first layout path and/or the second layout path comprise at least one curved path.

2. The method for text processing of claim 1, wherein determining the text to be laid out corresponding to the text to be processed and the second layout path corresponding to the text to be laid out in response to the character layout trigger operation input for the text to be processed comprises:
using, in response to a character selection trigger operation input for at least some of the text characters in the text to be processed, text comprising the selected text characters as the text to be laid out; and
determining, in response to a layout switch trigger operation input for the text to be laid out, a switched layout path, and using the switched layout path as the second layout path corresponding to the text to be laid out.

3. The method for text processing of claim 2, wherein determining the switched layout path in response to the layout switch trigger operation comprises:
in response to a plurality of layout path identifications being displayed in the text editing interface, determining, in response to an identification selection operation for a layout path identification, a preset layout path corresponding to the selected layout path identification as the switched layout path; or
determining the switched layout path based on the first layout path and a preset switching rule in response to a control trigger operation performed on a layout switching control, wherein the preset switching rule is to randomly switch among a plurality of preset layout paths or sequentially switch according to a preset switching order corresponding to the plurality of preset layout paths.

4. The method for text processing of claim 1, wherein determining the text to be laid out corresponding to the text to be processed and the second layout path corresponding to the text to be laid out in response to the character layout trigger operation input for the text to be processed comprises:
displaying a text bounding box corresponding to the first layout path, and using text to be processed located in the text bounding box as the text to be laid out; and
determining, in response to a size adjustment trigger operation performed on the text bounding box, the second layout path corresponding to the text to be laid out based on adjusted size information of the text bounding box.

5. The method for text processing of claim 4, wherein determining the second layout path corresponding to the text to be laid out based on the adjusted size information of the text bounding box comprises:
determining path change information of the first layout path based on the adjusted size information of the text bounding box, and determining the second layout path corresponding to the text to be laid out based on the path change information, wherein the path change information comprises at least one of radius change information, curvature change information, or length change information of a path forming curve corresponding to the first layout path.

6. The method for text processing of claim 4, wherein after responding to the size adjustment trigger operation performed on the text bounding box, the method further comprises:
adjusting a font size and/or character spacing of the text characters in the text to be laid out.

7. The method for text processing of claim 1, wherein displaying the text to be laid out in the second layout path in the text editing interface comprises:
determining a reference character in characters to be laid out, determining a path forming curve corresponding to the second layout path, and determining a target layout position and a character rotation angle of the reference character in the path forming curve;
using the text characters in the text to be laid out as the characters to be laid out, and determining a target layout position and a character rotation angle corresponding to respective characters to be laid out based on the path forming curve, and the target layout position and the character rotation angle corresponding to the reference character; and
determining target layout text based on the target layout position and the character rotation angle corresponding to the respective characters to be laid out, and rendering the target layout text in the text editing interface.

8. The method for text processing of claim 7, wherein determining the target layout position and the character rotation angle corresponding to the respective characters to be laid out based on the path forming curve, and the target layout position and the character rotation angle corresponding to the reference character comprises:
in response to the path forming curve being an arc curve, determining a text layout length of the text to be laid out in the arc curve;
determining the target layout position corresponding to the respective characters to be laid out based on character spacing between the characters to be laid out and a central angle of the arc curve; and
determining the character rotation angle corresponding to the respective characters to be laid out based on the text layout length, the character spacing between the characters to be laid out and the central angle of the arc curve.

9. The method for text processing of claim 8, wherein after determining the target layout position and the character rotation angle corresponding to the respective characters to be laid out based on the text layout length, the character spacing between the characters to be laid out and the central angle of the arc curve, the method further comprises:
in response to a bending direction of the arc curve being a preset direction, adjusting the target layout position corresponding to the respective characters to be laid out by a preset offset distance in a direction away from the bending direction, and updating an adjusted position of the character to be laid out to the target layout position corresponding to the character to be laid out.

10. The method for text processing of claim 8, wherein before determining the target layout position and the character rotation angle corresponding to the respective characters to be laid out based on the text layout length, the character spacing between the characters to be laid out and the central angle of the arc curve, the method further comprises:
in response to the text to be laid out comprising a plurality of lines of sub-text, adjusting a radius of the arc curve corresponding to respective lines of sub-text to increase spacing between the sub-texts, and updating the arc curve based on the adjusted radius.

11. The method for text processing of claim 1, wherein after displaying the text to be laid out in the second layout path in the text editing interface, the method further comprises:
determining, in response to a background color setting trigger operation input for the text to be laid out, a background region corresponding to the text to be laid out, and displaying the background region in a set color.

12. The method for text processing of claim 11, wherein determining the background region corresponding to the text to be laid out comprises:
determining a text background box corresponding to the text to be laid out based on the second layout path, and using a region surrounded by the text background box as the background region corresponding to the text to be laid out, wherein in response to the text to be laid out comprising a plurality of lines of sub-text, the text background box is an overall background box corresponding to all the sub-texts of the text to be laid out or a line background box corresponding to a single line of sub-text.

13. An apparatus for text processing, comprising:
a text adding module configured to display, in a text editing interface, added text to be processed in a first layout path in response to a text adding trigger operation, wherein the text to be processed comprises a plurality of text characters;
a layout trigger module configured to determine, in response to a character layout trigger operation input for the text to be processed, text to be laid out corresponding to the text to be processed and a second layout path corresponding to the text to be laid out, wherein the text to be laid out is text comprising some or all of the text characters in the text to be processed; and
a layout update module configured to display, in the text editing interface, the text to be laid out in the second layout path, wherein the first layout path and/or the second layout path comprise at least one curved path.

14. An electronic device, comprising:
one or more processors; and
a storage device, configured to store one or more programs,
wherein the one or more programs, when executed by the one or more processors, cause the one or more processors to perform actions for text processing, the actions comprising:
displaying, in a text editing interface, added text to be processed in a first layout path in response to a text adding trigger operation, wherein the text to be processed comprises a plurality of text characters;
determining, in response to a character layout trigger operation input for the text to be processed, text to be laid out corresponding to the text to be processed and a second layout path corresponding to the text to be laid out, wherein the text to be laid out is text comprising some or all of the text characters in the text to be processed; and
displaying, in the text editing interface, the text to be laid out in the second layout path, wherein the first layout path and/or the second layout path comprise at least one curved path.

15. The electronic device of claim 14, wherein determining the text to be laid out corresponding to the text to be processed and the second layout path corresponding to the text to be laid out in response to the character layout trigger operation input for the text to be processed comprises:
using, in response to a character selection trigger operation input for at least some of the text characters in the text to be processed, text comprising the selected text characters as the text to be laid out; and
determining a switched layout path in response to a layout switch trigger operation input for the text to be laid out, and using the switched layout path as the second layout path corresponding to the text to be laid out.

16. The electronic device of claim 15, wherein determining the switched layout path in response to the layout switch trigger operation comprises:
in response to a plurality of layout path identifications being displayed in the text editing interface, determining, in response to an identification selection operation for a layout path identification, a preset layout path corresponding to the selected layout path identification as the switched layout path; or,
determining the switched layout path based on the first layout path and a preset switching rule in response to a control trigger operation performed on a layout switching control, wherein the preset switching rule is to randomly switch among a plurality of preset layout paths or sequentially switch according to a preset switching order corresponding to the plurality of preset layout paths.

17. The electronic device of claim 14, wherein determining the text to be laid out corresponding to the text to be processed and the second layout path corresponding to the text to be laid out in response to the character layout trigger operation input for the text to be processed comprises:
displaying a text bounding box corresponding to the first layout path, and using the text to be processed located in the text bounding box as the text to be laid out; and
determining, in response to a size adjustment trigger operation performed on the text bounding box, the second layout path corresponding to the text to be laid out based on adjusted size information of the text bounding box.

18. The electronic device of claim 14, wherein displaying the text to be laid out in the second layout path in the text editing interface comprises:
determining a reference character in characters to be laid out, determining a path forming curve corresponding to the second layout path, and determining a target layout position and a character rotation angle of the reference character in the path forming curve;
using the text characters in the text to be laid out as the characters to be laid out, and determining a target layout position and a character rotation angle corresponding to respective characters to be laid out based on the path forming curve, and the target layout position and the character rotation angle corresponding to the reference character; and
determining target layout text based on the target layout position and the character rotation angle corresponding to the respective characters to be laid out, and rendering the target layout text in the text editing interface.

19. The electronic device of claim 14, wherein after displaying the text to be laid out in the second layout path in the text editing interface, the actions further comprise:
determining, in response to a background color setting trigger operation input for the text to be laid out, a background region corresponding to the text to be laid out, and displaying the background region in a set color.

20. A storage medium comprising computer-executable instructions, wherein the computer-executable instructions, when executed by a computer processor, are configured to perform actions for text processing, the actions comprising:
displaying, in a text editing interface, added text to be processed in a first layout path in response to a text adding trigger operation, wherein the text to be processed comprises a plurality of text characters;
determining, in response to a character layout trigger operation input for the text to be processed, text to be laid out corresponding to the text to be processed and a second layout path corresponding to the text to be laid out, wherein the text to be laid out is text comprising some or all of the text characters in the text to be processed; and
displaying, in the text editing interface, the text to be laid out in the second layout path, wherein the first layout path and/or the second layout path comprise at least one curved path.
